# EUROPÄISCHE PATENTSCHRIFT

(11) **EP 0 602 399 B1**
(45) Veröffentlichungstag und Bekanntmachung des Hinweises auf die Patenterteilung: **08.01.1997**
(21) Anmeldenummer: 93118432.9
(22) Anmeldetag: 15.11.1993
(51) Int. Cl.: B28B 13/04, B65G 1/04, B65G 1/14

(54) **Regalsystem zum Einlagern von Beton-Formkörpern während des Abbindens**
Shelving assembly for storing concrete moulded products during curing
Dispositif de rayonnages pour l'entreposage d'éléments moulés en béton pendant leur durcissement

(30) Priorität: 18.12.1992 DE 4242869
(43) Veröffentlichungstag der Anmeldung: 22.06.1994
(73) Patentinhaber: Georg Prinzing GmbH & Co. KG Betonformen- und Maschinenfabrik, 89143 Blaubeuren (DE)
(72) Erfinder: Kraiss, Richard, D-89150 Laichingen (DE)
(74) Vertreter: Vetter, Hans, Dipl.-Phys. Dr.

(56) Entgegenhaltungen:
- DE-C- 4 037 593
- FR-A- 720 571
- GB-A- 486 330
- US-A- 1 369 393

## Beschreibung

Die Erfindung betrifft ein Regalsystem zur Zwischenlagerung von mit Formkörpern aus Beton belegten Unterlagsbrettern, bestehend aus einem Regal und einer Vorrichtung zum Ein- und Auslagern in vertikaler Richtung von oben bzw. nach oben. Da sich frisch geformte Betonkörper noch nicht stapeln lassen, sind bei der maschinellen Fertigung Regale erforderlich, um die gefertigten Formkörper auf einer beschränkten Grundfläche unterzubringen. Von oben her bedienbare Regale haben den Vorteil, keine Zwischengänge zu benötigen und daher die vorhandene Grundfläche besonders gut auszunutzen.

Die Anmelderin geht davon aus, daß es bekannt ist, bei einem Regalsystem der eingangs bezeichneten Art bewegliche Auflageorgane in die Lagerschächte hinein vorzuklappen oder durch Verschieben in eine wirksame Stellung zu bringen. Beim Einlagern befinden sich diese Auflageorgane in einer unwirksamen Stellung, die den vertikalen Vorbeigang des vom Greifer gehaltenen Unterlagsbrettes erlaubt. An der vorgesehenen Lagerstelle werden dann vor dem Absetzen die Auflageorgane in ihre wirksame Stellung gebracht. Abgesehen von dem technischen Aufwand für die beweglichen Auflageorgane selbst sind dabei Antriebsmittel und - im Falle einer selbsttätigen Ein- und Auslagerung - verhältnismäßig komplizierte Steuermittel erforderlich.

Der Erfindung liegt die Aufgabe zugrunde, ein platzsparendes Regalsystem zu schaffen, das einfach ist und doch voll automatisch betrieben werden kann.

Diese Aufgabe wird ausgehend von einem Regalsystem der einleitend bezeichneten Gattung erfindungsgemäß durch die Merkmale des Anspruchs 1 gelöst. Die hierbei verwendeten Auflager können an dem Gerüst fest angebracht sein, was nicht nur die Herstellung des Regals erheblich vereinfacht, sondern auch die mit dem Betrieb von beweglichen Auflagern verbundenen Störungen ausschließt. Die Unterlagsbretter sind hinsichtlich ihres Umrisses an die Auflageranordnung so angepaßt, daß sie in vertikaler Richtung an den Auflagern vorbei bewegt werden können, um dann an der beabsichtigten Lagerstelle nur ein kleines Stück weit horizontal bewegt und dann auf die Auflager aufgelegt zu werden. Umgekehrt bedarf es beim Auslagern nach dem Anheben des Unterlagsbretts ebenfalls nur einer kleinen Horizontalbewegung, um das Brett dann vertikal nach oben aus dem Schacht ausheben zu können.

Die erwähnte Horizontalbewegung, die notwendig ist, um das Unterlagsbrett oder an ihm fest angebrachte Vorsprünge mit den Auflagern in Deckung oder außer Deckung zu bringen, kann ohne großen Aufwand von dem Greifer ausgeführt werden. Es kann eine Längsbewegung sein, die möglicherweise mit der Greifer-Laufrichtung übereinstimmt. Zum Beispiel kann ein rechteckiges Unterlagsbrett an den Längs- oder Querkanten je zwei Randausschnitte haben und als Auflager können an dem Regalgerüst kurze Kragarme angebracht sein, welche in die Randausschnitte hinein vorstehen und nicht breiter als diese sind. Die Horizontalbewegung wäre in diesem Fall eine Längsbewegung in Richtung der betreffenden Kanten über die Breite der Ausschnitte.

Nach einem bevorzugten Ausführungsbeispiel kann demgegenüber auf eine besondere Ausformung der Kontur der Unterlagsbretter verzichtet werden. Es wird vorgeschlagen, daß übliche rechtwinklige Unterlagsbretter verwendet werden, deren Ecken die Vorsprünge bilden, und daß die Horizontalbewegung eine Drehbewegung ist. Dabei ist das Regal ein Pfostenfeld aus frei stehenden vertikalen Pfosten, die in einem dem Format der Unterlagsbretter entsprechenden Flächenraster angeordnet und an denen Auflager befestigt sind. Ein solches System hat den bestechenden Vorteil, daß es bei vorhandenen Fertigungsanlagen für Betonkörper eingesetzt werden kann, die mit bewährten glattrandigen Unterlagsbrettern arbeiten. Der Aufbau des Regals in Form von einzeln stehenden Pfosten ist außerordentlich einfach und kostengünstig. Die Pfosten müssen nur genau auf Abstand gesetzt und vertikal ausgerichtet werden. Besonders zweckmäßig ist es, wenn die Unterlagsbretter quadratisch sind und die Auflager der Pfosten eine kreisrunde Auflagefläche bilden.

Zum Ein- und Auslagern ist ein heb- und senkbarer, über dem Pfostenfeld verfahrbarer Greifer vorgesehen, der wenigstens ein Brett in horizontaler Lage aufnehmen und um einen kleinen Winkel drehen kann. Dabei wird die Anordnung zweckmäßigerweise so getroffen, daß die Unterlagsbretter in einer zum Pfostenraster im wesentlichen parallelen Lagerstellung mit den Ecken auf den Auflagern aufliegen und in einer gedrehten Fahrstellung bei der Vertikalbewegung an den Auflagern vorbei kommen.

Die Größe des Pfostenfeldes kann sich weitgehend nach den örtlichen Verhältnissen richten. Vier Pfosten bilden einen Lagerschacht. Durch zwei weitere Pfosten kann an diesem ein Lagerschacht angeschlossen werden und so weiter. Zweckmäßig ist es, wenn das Pfostenfeld eine Längsreihe von mehreren nebeneinanderliegenden Lagerschächten bildet, und der in Längsrichtung verfahrbare Greifer mit so vielen nebeneinanderliegenden einzelnen drehbaren Greifwerkzeugen ausgestattet ist, wie nebeneinanderliegende Lagerschächte vorgesehen sind.

Ein Ausführungsbeispiel der Erfindung wird nachfolgend anhand der Zeichnung erläutert. Im einzelnen zeigt
- Fig. 1: die Seitenansicht eines Regalteils mit vier Lagerschächten,
- Fig. 2: eine Draufsicht der Anordnung nach Fig. 1, wobei der Greifer nach der Schnittlinie II-II horizontal geschnitten ist,
- Fig. 3: einen Längsschnitt eines Regalpfostens in größerem Maßstab,
- Fig. 4: die Draufsicht des Pfostens nach Fig. 3,
- Fig. 5: eine Seitenansicht eines größeren Regalsystems in schematischer Darstellung und
- Fig. 6: die Draufsicht des Systems nach Fig. 5.

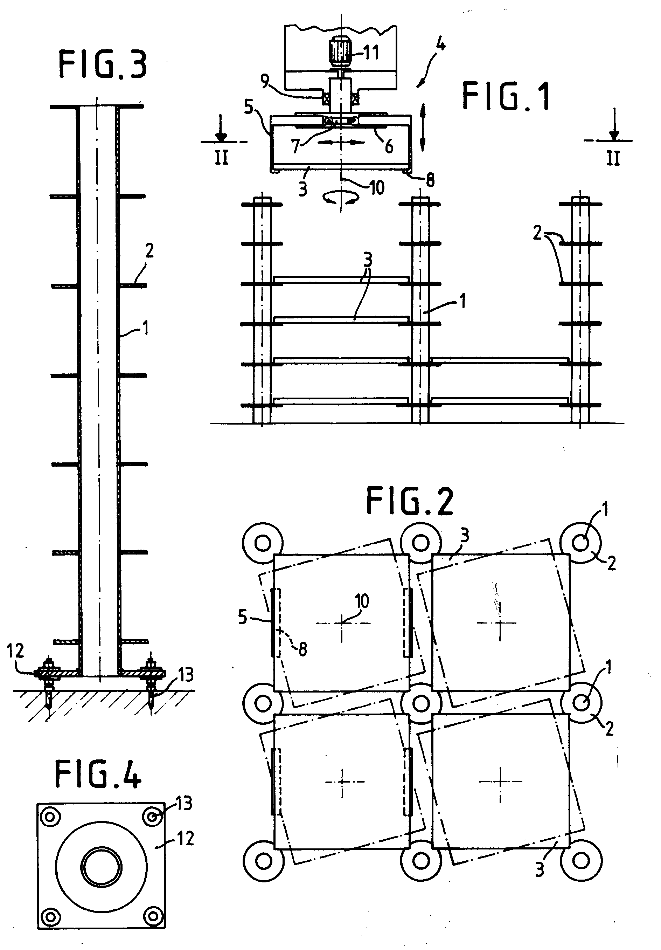

Anhand der Figuren 1 und 2 wird der Grundgedanke deutlich. Es sind neun in einem quadratischen Raster angeordnete Pfosten 1 gezeigt, an denen ringscheibenförmige zur Pfostenachse senkrechte Auflager 2 angeordnet sind. Sie liegen in horizontalen Schichten bestimmter Höhenabstände, die sich nach der Höhe der Betonformkörper richten, die zum Abbinden in das Regal eingelegt werden sollen. Diese nicht gezeigten Betonkörper liegen auf quadratischen Unterlagsbrettern 3, die in horizontaler Lage mittels eines Greifers 4 herangebracht werden.

Von dem Greifer 4 ist in Fig. 1 nur der speziell interessierende Teil mit den beiden horizontal gegeneinander verschiebbaren Greifwerkzeugen 5 gezeigt. Diese sind mit ihrem oberen Teil in einer Horizontalführung 6 verschiebbar gelagert und werden mittels eines Hubzylinders 7 betätigt. Weiter haben die Greifwerkzeuge 5 nach unten hängende Arme und am unteren Ende je einen nach innen stehenden streifenförmigen Flansch 8. Die Horizontalführung 6 und die Greifwerkzeuge 5 sind mittels eines Vertikallagers 9 bezüglich einer vertikalen Drehachse 10 um etwa 15° drehbar. Im Beispiel dient als Drehantrieb ein Elektromotor 11. Die Drehbewegung läßt sich aber auch mittels eines Hubzylinders über ein Hebelgestänge ausführen.

Der in diesem Fall nur ein Unterlagsbrett 3 erfassende Greifer wird genau mittig über einen der Lagerschächte gefahren und befindet sich beim Absenken in der strichpunktiert gezeichneten schrägen Fahrstellung. Ist die Einlagerungsebene nahezu erreicht, so dreht der Greifer bezüglich Fig. 2 nach rechts und bringt das Unterlagsbrett 3 in die voll ausgezogen dargestellte rasterparallele Lagerstellung. In dieser Winkelstellung wird das Brett so weit abgesenkt, daß es mit seinen vier Ecken auf den vier benachbarten Auflagern 2 aufliegt. Beim Auslagern ist die Reihenfolge umgekehrt. Das Unterlagsbrett wird zunächst in seiner Lagerstellung ein wenig angehoben und dann in die Fahrstellung gedreht und so an den darüberliegenden Auflagern 2 vorbei nach oben ausgehoben.

Die Detaildarstellung eines Pfostens nach den Figuren 3 und 4 läßt vor allem seine Befestigung im Fundament erkennen. Der Pfostenkörper ist einfach ein Stahlrohr, an dem die Auflager angeschweißt sind. Am unteren Ende ist der Pfosten 1 mit einer quadratischen Fußplatte 12 verschweißt, die mit vier Ankerschrauben 13 verschraubt ist. Die Ankerschrauben sind im Beton eingegossen und haben je zwei Muttern, die zwischen sich zwei Druckscheiben und zwischen diesen die Fußplatte 12 aufnehmen. Auf diese Weise kann der Pfosten durch entsprechende Einstellung der Muttern genau ins Lot gebracht bzw. mit den anderen Pfosten genau fluchtend justiert werden.

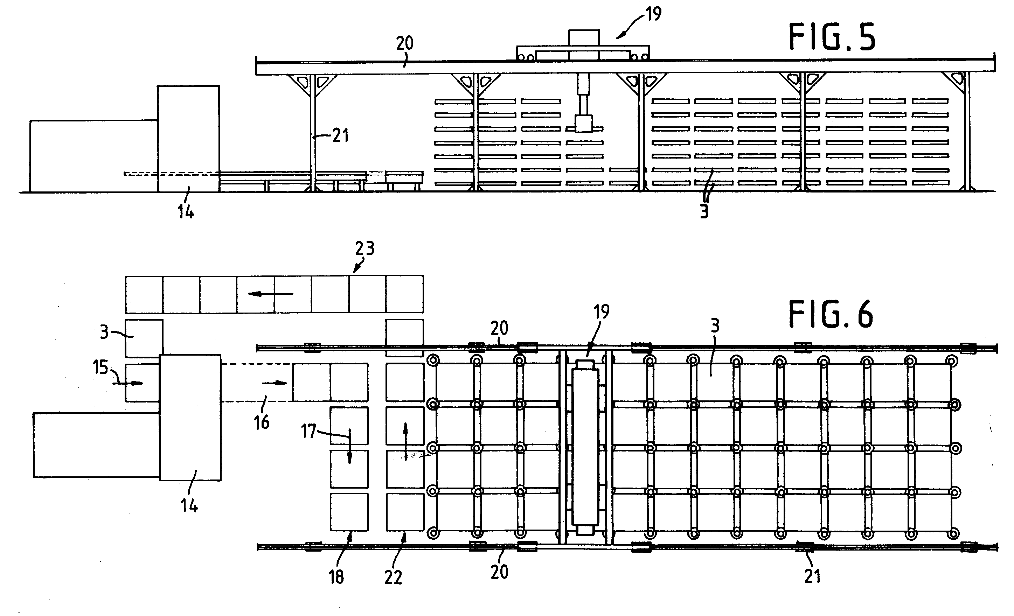

In der Systemdarstellung nach den Figuren 5 und 6 ist eine Fertigungsmaschine 14 für Betonformkörper nur schematisch als Block dargestellt. Die Betonkörper werden hiernach ebenfalls auf quadratischen Unterlagsbrettern 3 gefertigt bzw. beim Ausformen zum Weitertransport auf diesen Brettern abgelegt. Es wird jeweils ein leeres Brett in Richtung des Pfeiles 15 in die Fertigungsmaschine 14 eingeführt. Auf der gegenüberliegenden Seite verlassen die Bretter die Maschine jeweils mit einem oder mehreren darauf abgelegten frisch geformten Betonkörpern. Nach einer Pufferstrecke 16 gelangen die Bretter auf einen Querförderer, der sie in Richtung des Pfeiles 17 auf vier Startplätze 18 für die Einlagerung verteilt.

Bei dem Regal nach diesem Beispiel sind 48 Lagerschächte in einer Viererreihe angeordnet. Zum Ein- und Auslagern dient eine vollautomatische Greiferanordnung 19, die als Fahrbrücke ausgebildet ist. Die Fahrschienen 20 sind auf Säulen 21 zu beiden Seiten des Regals in dessen Längsrichtung angeordnet. Die nur schematisch gezeigte Greiferanordnung 19 hat in Querrichtung vier Greifplätze, d. h. sie ist in der Lage, die vier auf den Startplätzen 18 vorbereiteten Unterlagsbretter gleichzeitig aufzunehmen und diese einzeln zu drehen, wie es anhand von Fig. 2 erklärt worden ist.

Zum Einlagern nimmt die Greiferanordnung 19 die vier Bretter von den Startplätzen 18 auf, hebt sie über das Regal, fährt dann bis zu der gewünschten Lagerschacht-Querreihe und senkt die Bretter gemeinsam ab, wozu diese zunächst in die Fahrstellung und dann wieder in die Lagerstellung zurück geschwenkt werden. Beim Auslagern verlaufen diese Vorgänge in umgekehrter Reihenfolge und enden damit, daß die Greiferanordnung 19 eine Querreihe von vier Unterlagsbrettern auf vier Auslagerungsplätzen 22 vorne am Regal ablegt. Von hier aus werden die Bretter mit ihren bereits am Vortag gefertigten und inzwischen hart gewordenen Betonformkörpern in Querrichtung nach außen befördert und gelangen dann nach einer Richtungsänderung um 90° auf einen Abladetransporteur 23, wo die Formkörper von den Unterlagsbrettern abgenommen und einem Stapellager oder dem Verkauf zugeführt werden. Die leeren Unterlagsbretter 3 gelangen dann nach ihrer Reinigung oder eventuellen Zwischenlagerung wieder zur Fertigungsmaschine 14.

Zum Abbinden des Betons müssen die Formkörper gewöhnlich mindestens einen Tag gelagert werden. Zweckmäßigerweise sollte deshalb die Lagerkapazität eine Tagesproduktion um vier Lagerschächte übersteigen. Diese Lagerschacht-Querreihe sollte frei bleiben, damit man bei Beginn des Fertigungsbetriebes sofort in diese Schächte einlagern und beim Rückweg der Greiferanordnung 19 aus einer benachbarten Schachtreihe vier Bretter vom Vortag mitnehmen kann. Ist beispielsweise zu Anfang die letzte Querreihe frei, so wird beim Rückweg die vorletzte ausgelagert, d. h. bis die letzte Querreihe mit neuen Produkten gefüllt ist, ist die vorletzte leer und so fort. Fig. 5 zeigt eine während eines Arbeitstages herausgegriffene Situation: Nachdem der Greifer zuvor in den fast leeren Schacht ein Brett in der zweiten Ebene eingelegt hat, ist er dabei, vom benachbarten Schacht das dritte Brett von oben auszulagern.

Es ist als besonderer Vorteil anzusehen, daß die Greiferanordnung abgesehen von der kleinen Drehbewegung nur in zwei Achsen bewegt werden muß, so daß nicht nur das Regal selbst, sondern auch die Steueranordnung des Transportsystems sich durch Einfachheit und entsprechend geringe Gestehungskosten auszeichnet.
- 1: Pfosten
- 2: Auflager
- 3: Unterlagsbrett
- 4: Greifer
- 5: Greifwerkzeug
- 6: Horizontalführung
- 7: Hubzylinder
- 8: Flansch
- 9: Vertikallager
- 10: Drehachse
- 11: Motor
- 12: Fußplatte
- 13: Ankerschraube
- 14: Fertiger
- 15: Richtungspfeil
- 16: Pufferstrecke
- 17: Richtungspfeil
- 18: Startplätze
- 19: Greiferanordnung
- 20: Fahrschiene
- 21: Säule
- 22: Auslagerungsplätze
- 23: Abladetransporteur

## Patentansprüche

1. Regalsystem zur Zwischenlagerung von mit Formkörpern aus Beton belegten Unterlagsbrettern (3), bestehend aus einem Regal und einer Vorrichtung zum Ein- und Auslagern in vertikaler Richtung von oben bzw. nach oben, dadurch gekennzeichnet, daß das Regal ein Gerüst mit vertikalen oben offenen Lagerschächten ist, an dem in bestimmten Höhen in die Schächte vorspringende Auflager (2) angebracht sind und daß die Unterlagsbretter (3) Randeinschnitte oder Vorsprünge aufweisen, die mit den Auflagern so abgestimmt sind, daß das Unterlagsbrett die Auflager abdeckt und durch eine Horizontalbewegung außer Deckung mit den Auflagern gebracht werden kann.

2. Regalsystem nach Anspruch 1, dadurch gekennzeichnet, daß übliche rechtwinklige Unterlagsbretter (3) vorgesehen sind, deren Ecken als Vorsprünge dienen, und daß die Horizontalbewegung eine Drehbewegung ist.

3. Regalsystem nach Anspruch 2, dadurch gekennzeichnet, daß das Regal ein Pfostenfeld aus frei stehenden vertikalen Pfosten (1) ist, die in einem dem Format der Unterlagsbretter (3) entsprechenden Flächenraster angeordnet sind und an denen Auflager (2) befestigt sind.

4. Regalsystem nach Anspruch 3, dadurch gekennzeichnet, daß ein heb- und senkbarer, über dem Pfostenfeld verfahrbarer Greifer (4) vorgesehen ist, der wenigstens ein Unterlagsbrett (3) in horizontaler Lage aufnehmen und um einen kleinen Winkel drehen kann, und daß die Anordnung so getroffen ist, daß die Unterlagsbretter (3) in einer zum Pfostenraster im wesentlichen parallelen Lagerstellung mit den Ecken auf den Auflagern (2) aufliegen und in einer gedrehten Fahrstellung bei der Vertikalbewegung an den Auflagern (2) vorbei kommen.

5. Regalsystem nach Anspruch 4, dadurch gekennzeichnet, daß die Unterlagsbretter quadratisch sind.

6. Regalsystem nach Anspruch 4, dadurch gekennzeichnet, daß die Auflager (2) eine kreisrunde Auflagefläche bilden.

7. Regalsystem nach Anspruch 3, dadurch gekennzeichnet, daß das Pfostenfeld eine Längsreihe von mehreren nebeneinanderliegenden Lagerschächten bildet und daß die in Längsrichtung verfahrbare Greiferanordnung (19) mit so vielen nebeneinanderliegenden einzeln drehbaren Greifwerkzeugen ausgestattet ist, wie nebeneinanderliegende Lagerschächte vorgesehen sind.

## Claims

1. Shelf system for the interim storage of supporting boards (3) occupied by concrete mouldings, comprising a shelf and a device for placing into and removing from store in the vertical direction from or to the top, characterized in that the shelf is a framework with vertically-open storage shafts, with supports (2) projecting into the shafts at certain heights, and that the supporting boards (3) have edge indentations or projections which are so aligned with the supports that the supporting board covers the support and can be brought out of congruence with the support by a horizontal movement.

2. Shelf system according to claim 1, characterized in that conventional rectangular supporting boards (3) are provided, with their corners serving as projections, and that the horizontal movement is a rotary movement.

3. Shelf system according to claim 2, characterized in that the shelf is an area of free-standing vertical posts (1), arranged in a surface grid corresponding to the format of the supporting boards (3), and with supports (2) fastened to them.

4. Shelf system according to claim 3, characterized in that a gripper (4) which can be raised and lowered and can traverse over the whole area of posts is provided, capable of holding at least one supporting board (3) in the horizontal position and rotating it through a small angle, and that the arrangement is such that the supporting boards (3) rest by their edges on the supports (2) in a storage position essentially parallel to the post grid, and in a rotated movement position pass by the supports (2) during vertical movement.

5. Shelf system according to claim 4, characterized in that the supporting boards are square.

6. Shelf system according to claim 4, characterized in that the supports (4) form a circular bearing surface.

7. Shelf system according to claim 3, characterized in that the area of posts forms a longitudinal row of several adjacent storage shafts and that the gripper unit (19) which can traverse in the longitudinal direction is equipped with as many adjacent individually rotatable gripper tools as there are adjacent storage shafts.

## Revendications

1. Système de rayonnage destiné au stockage intermédiaire de plateaux (3) portant des moules en béton, comprenant un rayonnage et un dispositif de chargement et de déchargement dans le sens vertical, à partir du haut ou vers le haut, caractérisé en ce que le rayonnage est un échafaudage formé de cages de stockage verticales, ouvertes vers le haut, dans lequel des supports (2) en saillie sont montés dans les cages à des hauteurs déterminées, et en ce que les bords des plateaux (3) sont munis d'entailles ou de parties en saillie, dont la conception est définie par rapport aux supports, de telle sorte que le plateau recouvre les supports et qu'un mouvement horizontal permet de le déplacer de manière à ne plus masquer les supports.

2. Système de rayonnage selon la revendication 1, caractérisé en ce que les plateaux (3) sont des plateaux rectangulaires traditionnels, dont les angles sont utilisés comme saillies, et en ce que le mouvement horizontal est un mouvement de rotation.

3. Système de rayonnage selon la revendication 2, caractérisé en ce que le rayonnage forme un réseau de poteaux, formé de poteaux verticaux (1) isolés, disposés de manière à former un quadrillage correspondant au format des plateaux (3) et contre lesquels sont fixés des supports (2).

4. Système de rayonnage selon la revendication 3, caractérisé en ce qu'il est prévu de monter un grappin (4), que l'on déplace au-dessus du réseau de poteaux pour lever ou descendre des charges, qui peut recevoir au moins un plateau (3) en position horizontale et peut le faire tourner en décrivant un petit angle, et en ce que la disposition est conçue de telle sorte que les plateaux (3) reposent avec leurs angles sur les supports (2), dans une position sensiblement parallèle au quadrillage formé par les poteaux, et, par un faible mouvement de rotation, sont placés en position de déplacement, dans laquelle lesdits plateaux peuvent passer à côté des supports (2) pendant un mouvement vertical.

5. Système de rayonnage selon la revendication 4, caractérisé en ce que les plateaux sont carrés.

6. Système de rayonnage selon la revendication 4, caractérisé en ce que les supports (2) forment une surface de support circulaire.

7. Système de rayonnage selon la revendication 3, caractérisé en ce que le réseau de poteaux forme une rangée longitudinale comprenant plusieurs cages de stockage, montées les unes à côté des autres, et en ce que le grappin (19), que l'on déplace dans le sens longitudinal, est équipé de plusieurs crampons, montés les uns à côté des autres, qui peuvent être actionnés séparément, le nombre de crampons étant identique au nombre de cages de stockage placées les unes à côté des autres.
